# FASCICULE DE BREVET EUROPEEN

(11) **EP 0 843 837 B1**
(45) Date de publication et mention de la délivrance du brevet: **16.06.1999**
(21) Numéro de dépôt: 96927747.4
(22) Date de dépôt: 06.08.1996
(51) Int. Cl.: G02B 27/09, B23K 26/06, G02B 3/00, G02B 6/28

(54) **DISPOSITIF A FIBRES OPTIQUES POUR TRAITER OPTIQUEMENT UN FAISCEAU LASER**
OPTISCHE FASERVORRICHTUNG ZUR OPTISCHEN VERARBEITUNG EINES LASERSTRAHLS
FIBRE OPTIC DEVICE FOR OPTICALLY PROCESSING A LASER BEAM

(30) Priorité: 11.08.1995 FR 9509781
(43) Date de publication de la demande: 27.05.1998
(73) Titulaire: Société de Production et de Recherches Appliquées, 92270 Bois-Colombes (FR)
(72) Inventeur: GODARD, Bruno, F-91940 Les Ulis (FR); STEHLE, Robert, F-92250 La Garenne (FR)
(74) Mandataire: Nicolle, Olivier
(86) Numéro de dépôt international: FR9601252
(87) Numéro de publication internationale: WO9707424

(56) Documents cités:
- EP-A- 0 097 250
- EP-A- 0 266 120
- DE-A- 4 220 705
- US-A- 5 253 110
- PATENT ABSTRACTS OF JAPAN vol. 14, no. 67 (E-885) <4010> 07 Février 1990 & JP,A,01 286 478 (HITACHI) 17 Novembre 1989

## Description

La présente invention concerne un dispositif à fibres optiques pour traiter optiquement un faisceau laser.

Elle trouve une application générale dans tout domaine technique utilisant un laser, et notamment dans le traitement de surface par laser, tel que le recuit de silicium amorphe, le nettoyage, le polissage et la préparation de surface, notamment.

D'une façon générale, la répartition énergétique selon la section droite d'un faisceau laser, au moins dans l'ordre d'émission le plus bas, est d'allure gaussienne, en tout cas variable selon la section droite du faisceau.

Or, pour obtenir, par exemple, un recuit optimal de silicium amorphe, il est nécessaire d'appliquer un faisceau laser ayant une répartition énergétique homogène et sensiblement uniforme.

Cette homogénéité est surtout requise lorsque l'échantillon à traiter par laser est de grande taille (comme cela est décrit dans la Demande de Brevet français intitulée "Dispositif et procédé de traitement de surface par laser", déposée par le Demandeur le 11 août 1995 sous le N° 95 09778, et dont le contenu fait partie intégrante de la présente Demande, à toutes fins utiles). Elle est également exigée lorsque le faisceau laser incident est une combinaison de plusieurs faisceaux laser émanant d'une chaîne de modules laser agencés en parallèle et/ou en série (comme cela est décrit dans la Demande de Brevet intitulée "Procédé et dispositif de commande d'une source laser à plusieurs modules laser pour optimiser le traitement de surface par laser", déposée par le Demandeur le 11 août 1995 sous le N° 95 09780, et dont le contenu fait partie intégrante de la présente Demande, à toutes fins utiles).

On connaît déjà des moyens permettant d'homogénéiser un faisceau laser (JP-A-01 286 478, US-A-5 253 110, EP-A-0 266 120, DE-A-4 220 705 et EP-A-0 097 250).

Toutefois, ces moyens sont, le plus souvent, compliqués, coûteux, difficiles à mettre en oeuvre et peu adaptés à des faisceaux de grande taille, et de forte puissance.

La présente invention apporte justement une solution à ce problème.

Elle porte sur un dispositif optique pour traiter optiquement un faisceau laser d'entrée, comprenant:
- une matrice de m x n lentilles frontales, convergentes, jointives, disposées en m lignes et n colonnes, selon un plan perpendiculaire à la direction de propagation du faisceau laser d'entrée, et propres à découper ledit faisceau laser d'entrée en m x n faisceaux laser élémentaires ayant chacun une section transversale élémentaire de forme géométrique choisie, et une distribution spatiale de l'intensité lumineuse sensiblement homogène dans la section élémentaire, et
- au moins une lentille de collection, convergente, disposée selon un plan perpendiculaire à la direction de propagation du faisceau laser d'entrée, en aval des lentilles frontales selon le sens du cheminement du faisceau laser d'entrée, ladite lentille de collection étant propre à focaliser dans un plan choisi les faisceaux élémentaires issus des lentilles frontales, en vue de former un vaisceau de sortie ayant une distribution spatiale voulue de la densité d'énergie.

Selon une définition générale de l'invention, le dispositif comprend en outre:
- une pluralité de fibres optiques comprenant chacune une première extrémité et une seconde extrémité opposée à la première, les premières extrémités de fibres optiques étant disposées selon un premier arrangement matriciel de n lignes et n colonnes dans un premier plan intermédiaire, constitué par le plan focal des lentilles frontales, avec chacune des premières extrémités de fibres optiques sensiblement situées au point de focalisation d'une lentille frontale respective, tandis que les secondes extrémités des fibres optiques sont disposées selon un second arrangement bidimensionnel de répartition choisie dans un second plan intermédiaire situé en aval dudit plan focal des lentilles frontales, les premières et secondes extrémités des fibres optiques constituant respectivement des pupilles d'entrée et des pupilles de sortie et la lentille de collection, disposée en aval du second plan intermédiaire, étant apte à collecter les faisceaux élémentaires issus de la pluralité de pupilles de sortie.

Les fibres optiques sont ainsi aptes à transférer une pluralité de portions élémentaires homogènes de l'énergie laser. Dans le cas d'un laser de forte puissance, le dispositif selon l'invention permet ainsi de diviser et transférer une énergie laser en une pluralité de portions élémentaires homogènes d'énergie de faible puissance. Il en résulte une suppression des dommages que peuvent causer les effets d'une forte puissance laser, notamment sur les éléments optiques du dispositif selon l'invention.

Un tel dispositif permet aussi d'obtenir un faisceau de sortie homogène dans le champ proche.

Il trouve une application avantageuse lorsque le faisceau d'entrée à traiter est une combinaison de plusieurs faisceaux laser émanant d'une chaîne de modules laser mis en parallèle et/ou en série.

Par exemple, les fibres optiques possèdent un diamètre de l'ordre de 125 µm et une longueur inférieure à 1 m. En variante, elles ont une longueur supérieure à 1 m.

En pratique, le second arrangement bidimensionnel correspond à une matrice de k lignes et ℓ colonnes.

Selon un autre aspect de l'invention, la pluralité de fibres optiques d'indices i, j transmettant les faisceaux laser issus des lentilles frontales sont, aptes à les distribuer selon une répartjtion d'indices i', j' où certains au moins des indices i' et j' sont différents des indices i et j. En variante, les indices i' et j' sont respectivement égaux aux indices i et j.

Selon un autre mode de réalisation de l'invention, le dispositif comprend en outre un troisième plan intermédiaire, disposé en aval du second plan intermédiaire, possédant une pluralité (q·r) de lentilles frontales supplémentaires, jointives, disposées en q lignes et r colonnes, perpendiculairement à la direction de propagation des k· ℓ faisceaux laser élémentaires issus de la pluralité de pupilles de sortie, propres à recevoir lesdits k· ℓ faisceaux laser élémentaires issus de la pluralité de pupilles de sortie ainsi qu'à les découper en q.r faisceaux laser élémentaires ayant chacun une section transversale élémentaire de forme géométrique choisie, et une répartition énergétique sensiblement homogène dans la section élémentaire; la lentille de collection étant propre à collecter dans un plan choisi les faisceaux laser élémentaires issus des lentilles frontales supplémentaires.

D'autres avantages et caractéristiques de l'invention apparaîtront à la lumière de la description détaillée ci-après et des dessins dans lesquels:
- la figure 1 est une représentation schématique d'un dispositif homogénéiseur de l'art antérieur;
- la figure 2 est une variante de l'homogénéiseur de la figure 1;
- la figure 3 est un homogénéiseur à deux lentilles de collection;
- la figure 4 illustre un assemblage des lentilles frontales de l'homogénéiseur;
- la figure 5 représente schématiquement une forme d'execution selon l'invention, avec la pluralité de fibres optiques recevant les faisceaux laser découpés par les lentilles frontales pour les acheminer vers la lentille de collection;
- la figure 6 représente schématiquement une variante du dispositif de la fig. 5, avec une distribution des faisceaux laser découpés par les lentilles frontales selon une répartition croisée des fibres optiques;
- la figure 7 représente une variante du dispositif décrit en référence à la figure 5 dans laquelle les faisceaux laser découpés par les lentilles frontales et distribués par les fibres optiques sont découpés à nouveau par une pluralité de lentilles frontales supplémentaires et
- la figure 8 est une variante du dispositif décrit en référence à la figure 6 dans laquelle les faisceaux laser découpés par les lentilles frontales et distribués par les fibres optiques sont découpés à nouveau par une pluralité de lentilles frontales supplémentaires.

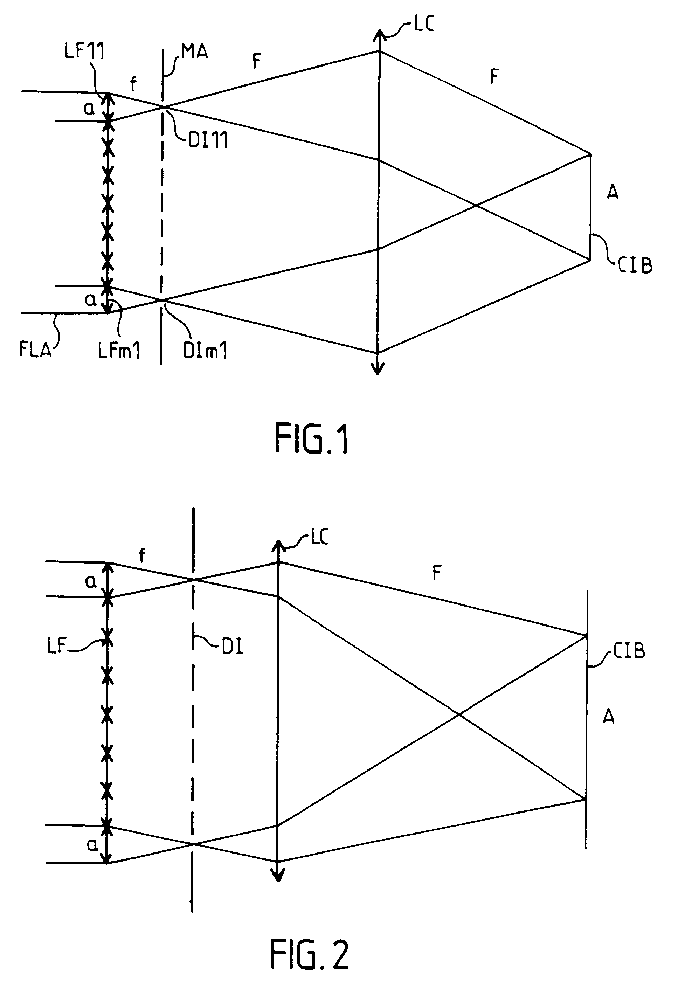

Sur la figure 1, la référence FLA désigne le faisceau laser à homogénéiser. Ce faisceau laser a une répartition énergétique non uniforme en section droite. Il émane par exemple d'un laser ou d'une chaîne de modules laser mis en parallèle et/ou en série.

Par exemple, ce faisceau laser est destiné au recuit du silicium amorphe par laser. Une application consiste à illuminer un panneau de grande taille de silicium amorphe pour la fabrication d'écrans plats à cristaux liquides. Ce faisceau laser est appliqué sur le plan cible CIB portant l'échantillon à traiter.

De façon connue, par exemple comme décrit dans le document JP-A-01 286 478, le dispositif optique pour homogénéiser un faisceau laser comprend m x n lentilles frontales LF, convergentes, jointives, disposées en m lignes et n colonnes perpendiculairement (transversalement) à la direction de propagation du faisceau laser à traiter. m et n sont des nombres entiers, par exemple m et n sont égaux à 7. Les lentilles frontale (LF) sont agencées selon une matrice rectangulaire droite ou oblique; par exemple, elles sont régulièrement distribuées à l'intérieur d'un rectangle ou d'un parallélogramme.

Ces lentilles découpent le faisceau laser FLA en m x n faisceaux laser ayant chacun une section transversale sensiblement uniforme et une répartition énergétique sensiblement homogène.

Il est prévu une lentille de collection LC, convergente, disposée perpendiculairement à la direction de propagation du faisceau de lumière, en aval des lentilles frontales LF selon le sens de cheminement du faisceau laser. Cette lentille de collection est propre à focaliser, dans le plan cible CIB, les faisceaux issus des lentilles frontales.

m x n diaphragmes DI peuvent être associés respectivement aux mxn lentilles frontales. Chaque diaphragme est disposé sensiblement dans le plan focal objet de la lentille associée et reçoit le faisceau de lumière issu de la lentille frontale associée afin de le filtrer spatialement.

La référence "a" désigne la largeur d'une lentille frontale LF. La référence f désigne la distance focale (proche du tirage) entre une lentille frontale et le diaphragme associé DI. La référence F désigne la distance (qui peut être différente de la distance focale) entre un diaphragme DI et la lentille de collection LC. La référence A désigne la largeur du faisceau laser homogénéisé obtenu par l'homogénéiseur HO au niveau du plan CIB selon l'invention. La dimension A est égale à a x F / f.

Chaque diaphragme DI comprend une ouverture de forme et dimensions choisies, par exemple circulaire. Un support ou masque MA maintient la pluralité de diaphragmes.

Les lentilles frontales sont par exemple du type convexe-plan ou biconvexe, ou convexe-concave.

Il est fait en sorte que la section transversale du faisceau de lumière issu de chaque lentille frontale dont la forme est déterminée par la forme des lentilles, est rectangulaire ou hexagonale, en aval des diaphragmes.

Lorsque la lentille de collection LC est de petit diamètre, le dispositif optique est moins coûteux et présente moins d'aberrations optiques qu'avec une lentille de collection de grande taille.

Sur la figure 2, la lentille de collection LC est disposée de telle sorte que le plan focal des lentilles LF n'est pas confondu avec celui de la lentille de collection LC. Cette variante confère une réduction de l'encombrement du dispositif homogénéiseur.

La marche des rayons lumineux montre ici que le dispositif homogénéiseur n'est pas nécessairement afocal.

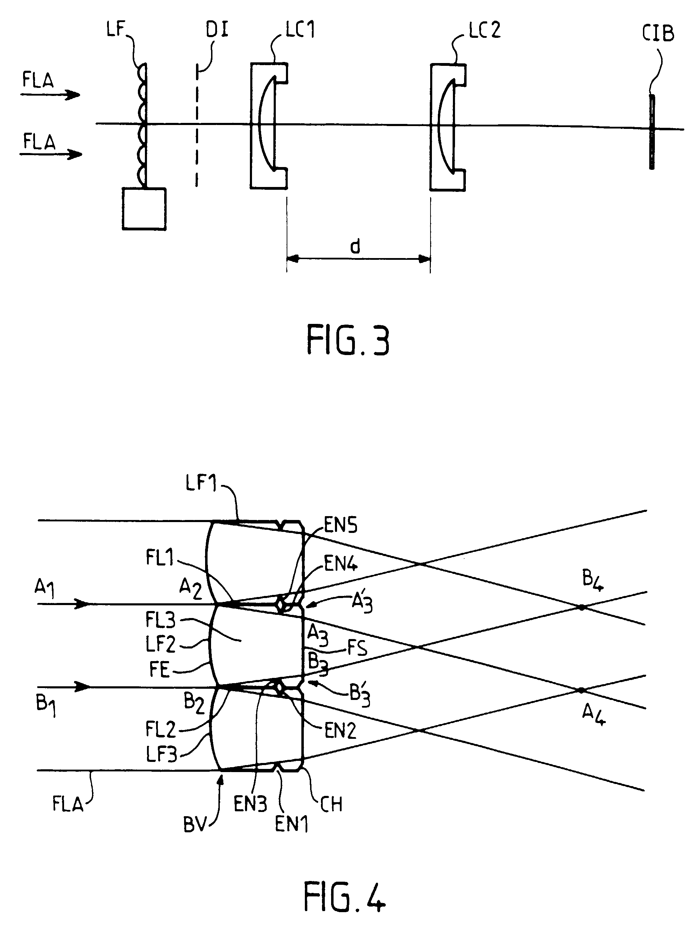

En référence à la figure 3, la lentille de collection LC est remplacée par deux lentilles LC1 et LC2, convergentes, disposées perpendiculairement à la direction de propagation du faisceau de lumière, en aval des lentilles frontales LF et des diaphragmes DI associés.

Très avantageusement, ces lentilles de collection LC1 et LC2 sont mobiles en translation selon l'axe optique.

On fait varier la distance d entre les deux lentilles LC1 et LC2 pour faire varier la focale résultante et obtenir au niveau du plan cible CIB une taille de faisceau homogénéisé adaptée à l'application choisie, par exemple la taille des panneaux à traiter dans le cas d'un recuit de silicium amorphe.

Il est à remarquer que les autres éléments optiques, à savoir les lentilles frontales LF, les diaphragmes DI et le plan cible CIB peuvent aussi être mobiles en translation selon l'axe optique.

Le choix des distances relatives entre les différents éléments optiques permet non seulement d'adapter la taille du faisceau laser homogénéisé à l'application choisie (possibilité de choisir le grandissement en faisant varier la distance d), mais aussi de réduire l'encombrement du dispositif homogénéiseur.

Il est à remarquer également que le choix de la distance à permet aussi d'ajuster l'énergie par unité de surface délivrée par le faisceau laser, comme cela est décrit dans la Demande de Brevet déposée par le Demandeur pour "Procédé et dispositif de commande d'une source laser à plusieurs modules laser pour optimiser le traitement de surface par laser" et déjà mentionnée ci-avant.

Sur la figure 4, on a représenté la marche de plusieurs faisceaux à travers plusieurs lentilles frontales LF d'une même ligne m. Pour faciliter la compréhension de l'invention, seulement trois lentilles frontales sont schématisées les unes à côté des autres. Ces lentilles frontales sont par exemple de type convexe-plan. Elles sont de forme générale parallélépipédique avec une face d'entrée FE, une face de sortie FS et quatre faces latérales FL1 à FL4. La partie convexe reçoit le faisceau laser à traiter FLA. Une face latérale d'une lentille frontale est définie par exemple par les points A2, A'3, B'3 et B2 pour la face latérale FL3 de la lentille centrale LF2.

Le faisceau laser à traiter issu du point A1 est appliqué sur la lentille centrale LF2 au niveau du point A2. Ce faisceau traverse la lentille frontale LF2 jusqu'au point A3 pour être ensuite acheminé vers le point A4. Il est à remarquer que le point A3 est légèrement décalé par rapport au point A'3.

La partie convexe d'une lentille frontale comprend ici deux bords vifs tels que BV.

La lentille frontale LF2 comprend une rainure EN4 de faible profondeur ménagée transversalement dans la face latérale FL1.

De même, la lentille frontale LF2 comprend une rainure EN3 de faible profondeur ménagée transversalement dans la face latérale FL2.

De préférence, les rainures sont ménagées à proximité de la face de sortie de la lentille frontale.

Il en est de même pour les autres lentilles frontales.

Les deux lentilles frontales adjacentes LF2 et LF3 sont accolées l'une à l'autre. La coopération des rainures EN3 et EN2 respectives permet un collage desdites lentilles par application de colle dans lesdites rainures EN3 et EN2, sans perturbation des propriétés optiques des faisceaux lumineux traversant lesdites lentilles frontales LF2 et LF3.

La marche du faisceau B1 à travers la lentille frontale centrale LF2 passe selon les points B2, B3 et B4.

Il est à remarquer que le chemin lumineux n'est pas perturbé par les encoches ou rainures EN et les chanfreins CH.

D'autres moyens d'assemblage des lentilles sont possibles selon la Demande de Brevet international intitulée "Dispositif optique pour homogénéiser un faisceau laser", déposée par le Demandeur le même jour que la présente Demande, et dont le contenu fait partie intégrante de la présente Demande, à toutes fins utiles.

Les lentilles frontales sont de forme générale rectangulaire ou hexagonale avec des côtés d'une longueur de l'ordre de 1 cm.

Par exemple, le faisceau à homogénéiser FLA est rectangulaire avec des côtés de l'ordre de 5 à 8 cm.

Selon l'invention, les faisceaux laser découpés par les lentilles frontales LF sont transférés et distribués vers la lentille de collection LC à l'aide de moyens de transmission optique tels que des fibres optiques ou analogues.

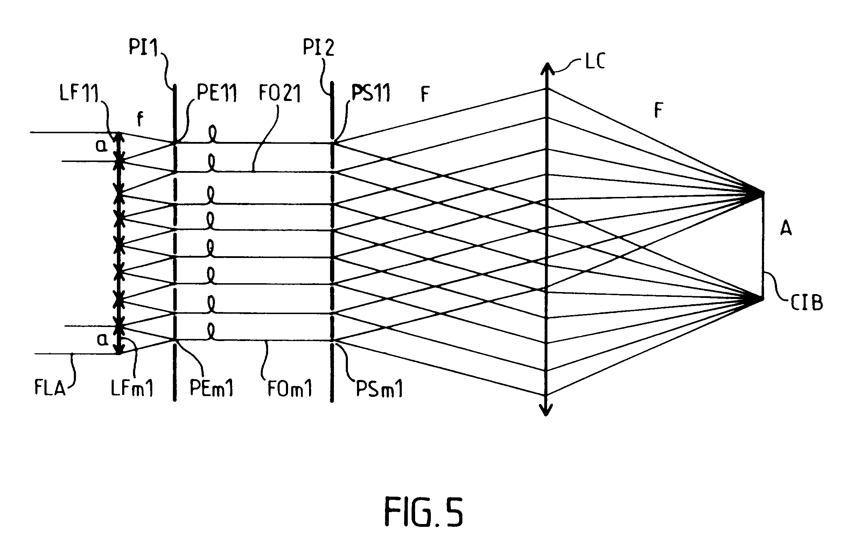

En référence à la figure 5, les moyens de transmission optique comprennent une pluralité (m·n) de fibres optiques FO d'indices i et j, aptes à transférer individuellement les faisceaux laser provenant d'une pluralité (m·n) de pupilles d'entrée PE d'indices i et j associes à la pluralité (m·n) de lentilles frontales LF d'indices i et j vers une pluralité (k·ℓ) de pupilles de sortie PS d'indices i' et j'.

On entend ici par m·n ou k·ℓ, une matrice bidimensionnelle agencée en m colonnes (ou k) et n lignes (ou ℓ). Les indices i et j varient ici respectivement de 1 à m et de 1 à n.

La pluralité (m·n) de pupilles d'entrée PE est située sur un plan intermédiaire PI1 disposé dans le plan focal des (mxn) lentilles frontales LF.

La pluralité (kxℓ) de pupilles de sortie PS d'indices i' et j' est disposée sur un plan intermédiaire PI2 qui est distinct du plan intermédiaire PI1.

Il est à observer que les pupilles d'entrée et/ou de sortie peuvent être matérialisées ou non. La matérialisation permet d'améliorer le filtrage spatial. Par ailleurs, la correspondance optique entre les pupilles d'entrée et les pupilles de sortie est ici avantageusement bi-univoque.

Il convient de remarquer ici que chaque fibre optique FO contribue pour sa part au transfert d'une portion de l'énergie laser. Dans le cas d'un laser de forte puissance, le dispositif selon l'invention permet ainsi de diviser et de transférer une énergie laser de forte puissance en une pluralité de portions d'énergie de moindre puissance. Il en résulte une suppression des dommages que peuvent causer les effets de la forte puissance laser, notamment sur les éléments optiques du dispositif.

Il peut être avantageux que ces fibres optiques FO soient agencées en un faisceau au moins en partie croisé. C'est à dire que certaines au moins des fibres d'indices i, j, relient chacune pupille de sortie PS d'indices i' et j' n'ayant pas les mêmes valeurs que i et/ou j. En principe ces croisements sont agencés pour que toute pupille de sortie demeure alimentée depuis l'une des pupilles d'entrée.

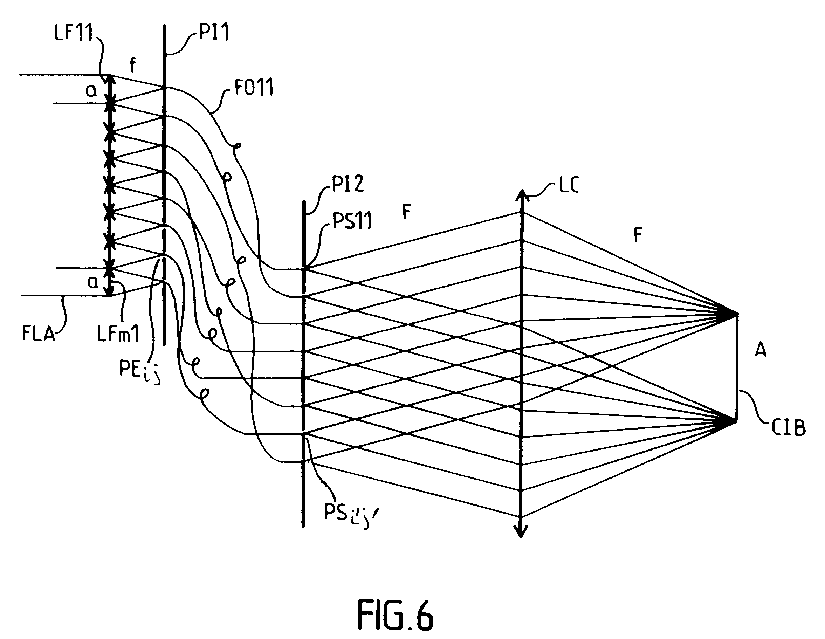

En d'autres termes, le faisceau de fibres collectant les énergies des lentilles LFᵢⱼ peut les distribuer selon une répartition PS_{i'j'} où certains au moins des i' et j' sont différents des i et j. Ceci permet de rapprocher encore la distribution d'énergie en sortie des caractéristiques désirées pour celle-ci (figure 6).

Il est à noter que les fibres optiques permettent en outre d'éclairer un plan cible CIB situé hors de l'axe optique des faisceaux laser FLA.

A cet égard, il est question dans ce qui précède d'homogénéiser le faisceau laser obtenu en sortie. Bien que des applications importantes impliquent l'obtention d'un faisceau dont la densité d'énergie par unité de surface soit uniforme en section droite, il est clair que le mot "homogénéiser" n'implique pas nécessairement l'égalité de la densité d'énergie sur toute le section droite, mais s'étend au contraire à l'obtention de toute distribution voulue de cette densité d'énergie.

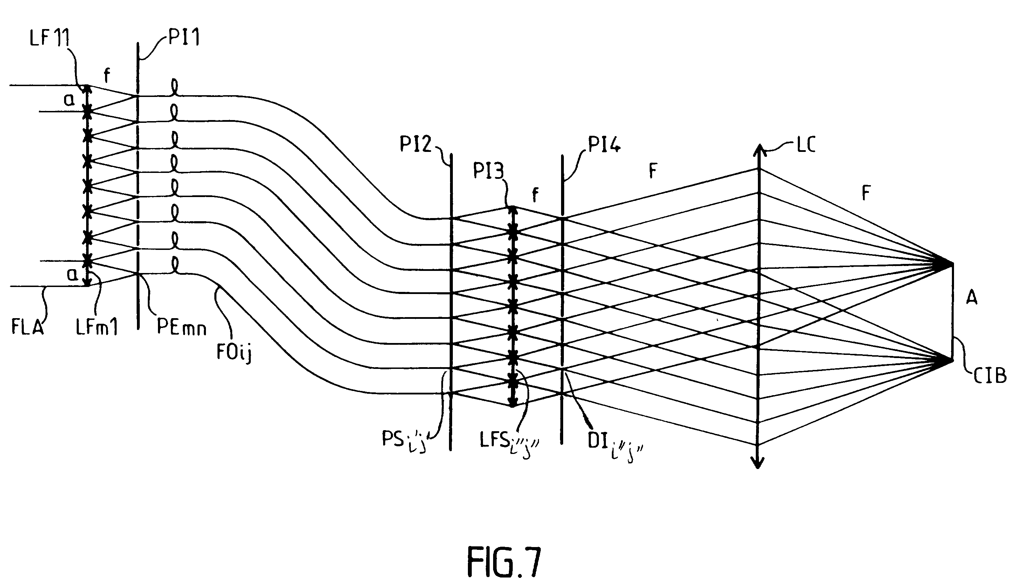

En variante, il peut être nécessaire de découper une fois de plus le faisceau laser pour en améliorer encore son homogénéité. Dans ces conditions (figure 7), le dispositif selon l'invention comprend en outre un plan intermédiaire PI3 possédant une pluralité de lentilles frontales supplémentaires LFS d'indices i" et j", disposées en q lignes et r colonnes, perpendiculairement à la de propagation des faisceaux laser issus de la pluralité (k·ℓ) de pupilles de sortie PS. Cette pluralité (q·r) de lentilles frontales supplémentaires LFS reçoit les faisceaux laser issus de la pluralité (k·ℓ) de pupilles de sortie PS_{i'j'} pour les découper en q.r faisceaux laser ayant chacun une section transversale sensiblement uniforme et une répartition énergétique sensiblement homogène.

La (ou les) lentille(s) de collection collecte(nt) dans le plan choisi CIB les faisceaux laser ainsi découpés par les lentilles frontales supplémentaires.

Les k·ℓ faisceaux laser issus des k·ℓ pupilles de sortie PS_{i'j'} sont découpés par les lentilles frontales supplémentaires LFS_{i"j"} selon une répartition où certains au moins des indices i' et j' sont différents des indices i" et j".

Avantageusement, un plan intermédiaire ,PI4 possède une pluralité de diaphragmes DI d'indices i" et j". Les diaphragmes DI d'indices i" et j" reçoivent les faisceaux laser d'indices i" et j" issus de la pluralité de lentilles frontales supplémentaires LFS afin de les filtrer spatialement.

Les fibres optiques peuvent être longues ou courtes. Par exemple, elles ont un diamètre de l'ordre de 125 µm (coeur de la fibre).

Pour un coeur de 125 µm, une fibre courte est inférieure à 1 mètre de long. Elle conserve la forme de la section droite du faisceau qui la pénètre.

Pour un coeur de 125 µm, une fibre longue est de longueur supérieure à 1 m. Elle dépolarise le faisceau lumineux qui la pénètre et émet un faisceau lumineux muni d'une symétrie de révolution.

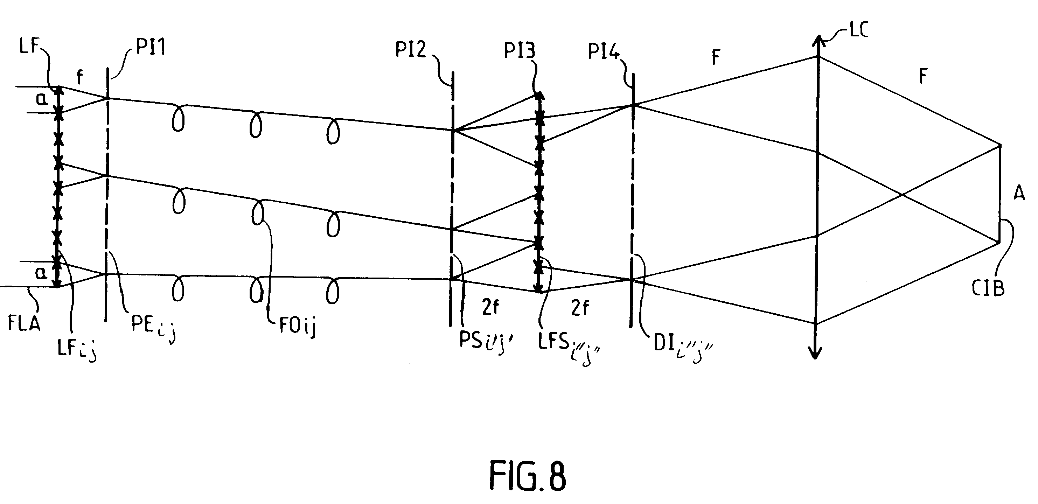

En référence à la figure 8, les lentilles frontales supplémentaires LFS sont disposées à une distance 2f du plan intermédiaire PI2 et du plan intermédiaire PI4. Dans ces conditions, les faisceaux lumineux issus des pupilles de sortie PS éclairent plusieurs lentilles frontales supplémentaires.

## Revendications

1. Dispositif optique pour traiter optiquement un faisceau laser d'entrée, comprenant une matrice de m x n lentilles frontales (LFᵢⱼ), convergentes, jointives, disposées en m lignes et n colonnes selon un plan perpendiculaire à la direction de propagation du faisceau laser d'entrée, et propres à découper le faisceau laser d'entrée en m x n faisceaux laser élémentaires ayant chacun une section transversale élémentaire de forme géométrique choisie, ainsi qu'une distribution spatiale de l'intensité lumineuse sensiblement homogène dans la section élémentaire, et au moins une lentille de collection (LC), convergente, disposée selon un plan perpendiculaire à la direction de propagation du faisceau laser d'entrée, en aval des lentilles frontales (LFᵢⱼ) selon le sens du cheminement du faisceau laser d'entrée, ladite lentille de collection (LC) étant propre à collecter dans un plan choisi (CIB) les faisceaux élémentaires issus des lentilles frontales en vue de former un faisceau de sortie ayant une distribution voulue de la densité d'énergie par unité de surface en section droite,
caractérisé en ce que ledit dispositif comprend en outre une pluralité de fibres optiques (FOᵢⱼ) comprenant chacune une première extrémité et une seconde extrémité opposée à la première, les premières extrémités de fibres optiques étant disposées selon un premier arrangement matriciel de m lignes et n colonnes dans un premier plan intermédiaire (PI1), constitué par le plan focal des lentilles frontales (LFᵢⱼ), avec chacune des premières extrémités de fibres situées sensiblement au point de focalisation d'une lentille frontale respective, tandis que les secondes extrémités des fibres optiques sont disposées selon un second arrangement bidimensionnel de répartition choisie dans un second plan intermédiaire (PI2) situé en aval dudit plan focal des lentilles frontales, les premières et secondes extrémités des fibres optiques constituant respectivement des pupilles d'entrée (PEᵢⱼ) et des pupilles de sortie (PS_{i'j'}) et la lentille de focalisation, disposée en aval du second plan intermédiaire, étant apte à collecter les faisceaux élémentaires issus de la pluralité de pupilles de sortie (PS_{i'j'}).

2. Dispositif selon la revendication 1, caractérisé en ce que les fibres optiques (FIᵢⱼ) possèdent un diamètre de l'ordre de 125 µm et une longueur inférieure à 1 m.

3. Dispositif selon la revendication 1, caractérisé en ce que les fibres optiques (FOᵢⱼ) ont un diamètre de l'ordre de 125 µm et une longueur supérieure à 1 m.

4. Dispositif selon la revendication 1, caractérisé en ce que le second arrangement bidimensionnel correspond à une matrice de k lignes et ℓ colonnes.

5. Dispositif selon la revendication 4, caractérisé en ce que la pluralité de fibres optiques (FOᵢⱼ) transmettant les faisceaux laser issus des lentilles frontales (LFᵢⱼ) sont aptes à les distribuer selon une répartition (PS_{i'j'}) ou certains au moins des indices i' et j' sont différents des indices i et j.

6. Dispositif selon la revendication 4, caractérisé en ce que la pluralité de fibres optiques (FOᵢⱼ) transmettant les faisceaux laser issus des lentilles frontales (LFᵢⱼ) sont aptes à les distribuer selon une répartition (PS_{i'j'}) ou les indices i' et j' sont identiques aux indices i et j.

7. Dispositif selon l'une quelconque des précédentes revendications, caractérisé en ce qu'il comprend en outre un troisième plan intermédiaire (PI3), disposé en aval du second plan intermédiaire (PI2), possédant une pluralité de lentilles frontales supplémentaires (LFS_{i"j"}) jointives, disposées en q lignes et r colonnes, perpendiculairement à la direction de propagation des faisceaux laser élémentaires issus de la pluralité de pupilles de sortie (PS_{i'j'}), et propres à recevoir lesdits k·ℓ faisceaux laser élémentaires issus de la pluralité de pupilles de sortie (PS_{i'j'}), ainsi qu'à les découper en q.r faisceaux laser élémentaires ayant chacun une section transversale élémentaire de forme géométrique choisie, et une répartition énergétique sensiblement homogène dans la section élémentaire; la lentille de collection étant propre à collecter dans un plan choisi les faisceaux élémentaires issus des lentilles frontales supplémentaires (LFS_{i"j"}).

8. Dispositif selon la revendication 7, caractérisé en ce que la pluralité de lentilles frontales supplémentaires (LFS_{i"j"}) découpant les faisceaux laser élémentaires issus des pupilles de sortie (PS_{i'j'}) sont aptes à les découper selon une répartition (R_{i"j"}) ou certains au moins des indices i" et j" sont différents des indices i' et j'.

9. Dispositif selon la revendication 7, caractérisé en ce qu'il comprend en outre un quatrième plan intermédiaire (PI4), disposé en aval du troisième plan intermédiaire (PI3), possédant une pluralité de diaphragmes (DI_{i"j"}) propres à recevoir les q.r faisceaux laser élémentaires issus de la pluralité de lentilles frontales supplémentaires afin de les filtrer spatialement.

10. Dispositif selon l'une quelconque des précédentes revendications, caractérisé en ce que les lentilles frontales sont assemblées les unes aux autres sans perturber le trajet optique des faisceaux lumineux qui les traversent.

11. Dispositif selon l'une quelconque des précédentes revendications, caractérisé en ce qu'il comprend deux lentilles de collection (LC1, LC2) mobiles en translation selon l'axe optique du dispositif pour faire varier la focale résultante.

## Patentansprüche

1. Optische Vorrichtung zur optischen Behandlung eines Eintrittslaserstrahls, bestehend aus einer Matrix von m x n konvergierenden, aneinanderstoßenden Frontlinsen (Ltᵢⱼ), die in m Zeilen und n Spalten in einer zur Fortpflanzungsrichtung des Eintrittslaserstrahls senkrechten Ebene angeordnet sind und die dafür ausgelegt sind, den Eintrittslaserstrahl in m x n Einzellaserstrahlen zu zerschneiden, deren jeder einen Einzelquerschnitt von einer gewählten geometrischen Form sowie eine im wesentlichen homogene räumliche Verteilung der Lichtstärke in dem Einzelquerschnitt aufweist, sowie aus mindestens einer konvergierenden Sammellinse (LC), die in einer zur Fortpflanzungsrichtung des Eintrittslaserstrahls senkrechten Ebene in Wegrichtung des Eintrittslaserstrahls stromabwärts bezüglich der Frontlinsen (Lfᵢⱼ) angeordnet ist und die dafür ausgelegt ist, die aus den Frontlinsen austretenden Einzel strahlen in einer gewählten Ebene (CIB) zu sammeln, um einen Austrittsstrahl mit einer gewünschten Verteilung der Energiedichte pro Flächeneinheit im Querschnitt zu bilden,
dadurch gekennzeichnet, daß
die Vorrichtung außerdem eine Vielzahl von optischen Fasern (FOᵢⱼ) aufweist, die jeweils ein erstes Ende und ein dem ersten entgegengesetztes zweites Ende aufweisen, wobei die ersten Enden der optischen Fasern gemäß einer ersten Matrixanordnung mit m Zeilen und n Spalten in einer ersten Zwischenebene (PI1) angeordnet sind, die von der Brennebene der Frontlinsen (Lfᵢⱼ) gebildet wird, und jedes der ersten Enden der Fasern im wesentlichen im Brennpunkt einer jeweiligen Frontlinse gelegen ist, während die zweiten Enden der optischen Fasern gemäß einer zweiten gewählten zweidimensionalen Verteilungsanordnung in einer zweiten, stromabwärts bezüglich der Brennebene der Front linsen gelegenen Zwischenebene (PI2) angeordnet sind, wobei die ersten und zweiten Enden der optischen Fasern Eintrittspupillen (PEᵢⱼ) bzw. Austrittspupillen (PSᵢ,_{j'}) bilden und wobei die stromabwärts bezüglich der zweiten Zwischenebene angeordnete Fokussierungslinse dafür ausgelegt ist, die aus der Vielzahl von Austrittspupillen (PS_{i'j},) austretenden Einzelsstrahlen zu sammeln.

2. Vorrichtung nach Anspruch 1,
dadurch gekennzeichnet, daß
die optischen Fasern (FIᵢⱼ) einen Durchmesser im Bereich von etwa 125 µm und eine Länge von kleiner als 1 m besitzen.

3. Vorrichtung nach Anspruch 1,
dadurch gekennzeichnet, daß
die optischen Fasern (FOᵢⱼ) einen Durchmesser im Bereich von etwa 125 µm und eine Länge von größer als 1 m besitzen.

4. Vorrichtung nach Anspruch 1,
dadurch gekennzeichnet, daß
die zweite zweidimensionale Anordnung einer Matrix von k Zeilen und 1 Spalten entspricht.

5. Vorrichtung nach Anspruch 4,
dadurch gekennzeichnet, daß
die Vielzahl von optischen Fasern (FOᵢⱼ), welche die aus den Frontlinsen (LFᵢⱼ) austretenden Laserstrahlen übertragen, dafür ausgelegt ist, diese in einer Verteilung (PS_{i'j'}) zu liefern, in der zumindest manche der Indizes i' und j' von den Indizes i und j verschieden sind.

6. Vorrichtung nach Anspruch 4,
dadurch gekennzeichnet, daß
die Vielzahl von optischen Fasern (FOᵢⱼ), welche die aus den Frontlinsen (Lfᵢⱼ) austretenden Laserstrahlen übertragen, dafür ausgelegt ist, diese in einer Verteilung (Ps_{i'j'}) zu liefern, in der die Indizes i' und j' mit den Indizes i und j identisch sind.

7. Vorrichtung nach einem der vorhergehenden Ansprüche,
dadurch gekennzeichnet, daß
sie außerdem eine dritte Zwischenebene (PI3) aufweist, die stromabwärts bezüglich der zweiten Zwischenebene (PI2) angeordnet ist und die eine Vielzahl von Zusatzfrontlinsen (LfS_{i"j"}) besitzt, die senkrecht zur Fortpflanzungsrichtung der aus der Vielzahl von Austrittspupillen (PSᵢ,ⱼ,) austretenden Einzellaserstrahlen in q Zeilen und r Spalten angeordnet sind und die dafür ausgelegt sind, die aus der Vielzahl von Austrittspupillen (PS_{i'j'}) austretenden k.l Einzellaserstrahlen aufzunehmen und sie in q,r Einzellaserstrahlen zu zerschneiden, die jeweils einen Einzelquerschnitt von einer gewählten geometrischen Form und eine im wesentlichen homogene Energieverteilung in dem Einzelquerschnitt aufweisen, wobei die Sammellinse dafür ausgelegt ist, die aus den Zusatzfrontlinsen (LFS_{i"j"}) austretenden Einzelstrahlen in einer gewählten Ebene zu sammeln.

8. Vorrichtung nach Anspruch 7,
dadurch gekennzeichnet, daß
die Vielzahl von Zusatzfrontlinsen (LFS_{i"j"}), welche die aus den Austrittspupillen (PS_{i'j'}) austretenden Einzellaserstrahlen zerschneiden, dafür ausgelegt ist, diese in einer Verteilung (R_{i"j"}) zu zerschneiden, bei der mindestens manche der Indizes i" und j" von den Indizes i' und j' verschieden sind.

9. Vorrichtung nach Anspruch 7,
dadurch gekennzeichnet, daß
sie außerdem eine vierte Zwischenebene (PI4) aufweist, die stromabwärts bezüglich der dritten Zwischenebene (PI3) angeordnet ist und eine Vielzahl von Blenden (DI_{i"j"}) aufweist, die dafür ausgelegt sind, die q.r Einzellaserstrahlen, die aus der Vielzahl von Zusatzfrontlinsen austreten, aufzunehmen, um sie räumlich zu filtern.

10. Vorrichtung nach einem der vorhergehenden Ansprüche,
dadurch gekennzeichnet, daß
die Frontlinsen aneinandergefügt sind, ohne den optischen Weg der sie durchquerenden Lichtstrahlen zu stören.

11. Vorrichtung nach einem der vorhergehenden Ansprüche,
dadurch gekennzeichnet, daß
sie zwei Sammellinsen (LC1, LC2) aufweist, die in der optischen Achse der Vorrichtung translationsbeweglich sind, um die resultierende Brennweite zu variieren.

## Claims

1. An optical device for optically treating an entrance laser beam, comprising a matrix of m x n contiguous convergent front lenses (LFᵢⱼ) disposed in m rows and n columns in a plane perpendicular to the direction of propagation of the entrance laser beam, and suitable for dividing the entrance laser beam into m x n elementary laser beams each having an elementary transverse section of chosen geometric shape, and a spatial distribution of the light intensity which is substantially homogenous in the elementary section, and at least one convergent collection lens (LC) disposed in a plane perpendicular to the direction of propagation of the entrance laser beam, downstream of the front lenses (LFᵢⱼ) in the direction of travel of the entrance laser beam, the said collection lens (LC) being suitable for collecting, in a chosen plane (CIB), the elementary beams coming from the front lenses with a view to forming an exit beam having a desired distribution of the energy density per unit surface in cross section,
characterised in that said device also comprises a plurality of optical fibres (FOᵢⱼ) each comprising a first end and a second end opposite to the first, the first optical fibre ends being disposed in a first matrix-type arrangement of m rows and n columns in a first intermediate plane (PI1), consisting of the focal plane of the front lenses (LFᵢⱼ), with each of the first fibre ends situated substantially at the focusing point of a respective front lens, whilst the second optical fibre ends are disposed in a second bidimensional arrangement of chosen distribution in a second intermediate plane (PI2) situated downstream of the said focal plane of the front lenses, the first and second optical fibre ends constituting respectively entrance pupils (PEᵢⱼ) and exit pupils (PS_{i'j'}) and the focusing lens, disposed downstream of the second intermediate plane, being able to collect the elementary beams coming from the plurality of exit pupils (PS_{i'j'}).

2. A device as claimed in claim 1, wherein the optical fibres (FIᵢⱼ) possess a diameter of around 125 µm and a length less than 1 m.

3. A device as claimed in claim 1, wherein the optical fibres (FOᵢⱼ) have a diameter of around 125 µm and a length greater than 1 m.

4. A device as claimed in claim 1, characterised in that the second bidimensional arrangement corresponds to a matrix of k rows and 1 columns.

5. A device as claimed in claim 4, wherein the plurality of optical fibres (FOᵢⱼ) transmitting the laser beams coming from the front lenses (LFᵢⱼ) are able to distribute them in a distribution (PS_{i'j'}) in which at least some of the indices i' and j' are different from the indices i and j.

6. A device as claimed in claim 4, wherein the plurality of optical fibres (FOᵢⱼ) transmitting the laser beams coming from the front lenses (LFᵢⱼ) are able to distribute them in a distribution (PS_{i'j'}) where the indices i' and j' are identical to the indices i and j.

7. A device as claimed in any one of the preceding claims, also comprising a third intermediate plane (PI3) disposed downstream of the second intermediate plane (PI2), having a plurality of contiguous additional front lenses (LFS_{i"j"}) disposed in q rows and r columns, perpendicularly to the direction of propagation of the elementary laser beams coming from the plurality of exit pupils (PS_{i'j'}) and suitable for receiving the said k.l elementary laser beams coming from the plurality of exit pupils (PS_{i'j'}), and to divide them into q.r elementary laser beams each having an elementary transverse section of chosen geometric shape, and an energy distribution which is substantially homogenous in the elementary section; the collection lens being suitable for collecting, in a chosen plane, the elementary beams coming from the additional front lenses (LFS_{i"j"}).

8. A device as claimed in claim 7, wherein the plurality of additional front lenses (LFS_{i"j"}) dividing the elementary laser beams coming from the exit pupils (PS_{i'j'}) are able to divide them in a distribution (R_{i"j"}) where at least some of the indices i" and j" are different from the indices i' and j'.

9. A device as claimed in claim 7, also comprising a fourth intermediate plane (PI4) disposed downstream of the third intermediate plane (PI3), having a plurality of diaphragms (DI_{i"j"}) suitable for receiving the q.r laser beams coming from the plurality of additional front lenses in order to filter them spatially.

10. A device as claimed in any one of the preceding claims, wherein the front lenses are connected to each other without interfering with the optical path of the light beams which pass through them.

11. A device as claimed in any one of the preceding claims, comprising two collection lenses (LC1, LC2) able to move in translation along the optical axis of the device in order to vary the resulting focal length.
